# EUROPEAN PATENT SPECIFICATION

(11) **EP 3 906 566 B1**
(45) Date of publication and mention of the grant of the patent: **13.08.2025**
(21) Application number: 19907048.3
(22) Date of filing: 31.12.2019
(51) Int. Cl.: G21D 1/00, G21C 21/00, E21D 1/10, G21C 13/02

(54) **METHOD OF CONSTRUCTING A NUCLEAR FACILITY FOR A COMMERCIAL LIGHT WATER REACTOR**
VERFAHREN ZUM BAU EINER KERNTECHNISCHEN ANLAGE FÜR EINEN KOMMERZIELLEN LEICHTWASSERREAKTOR
MÉTHODE DE CONSTRUCTION D'UNE INSTALLATION NUCLÉAIRE POUR UN RÉACTEUR COMMERCIAL À EAU LÉGÈRE

(30) Priority: 31.12.2018 US 201816237637
(43) Date of publication of application: 10.11.2021
(73) Proprietor: Ge-Hitachi Nuclear Energy Americas LLC, Wilmington, NC 28401 (US)
(72) Inventor: DAHLGREN, Christer, N., Wilmington, NC 28401 (US); MCDONALD, Douglas, B., Wilmington, NC 28402 (US); KIRBY, Tatjana, B., Wilmington, NC 28401 (US); ANTHONY, Gary, M., Wilmington, NC 28401 (US); HUNT, Brian, S., Spring Grove, PA (US)
(74) Representative: Handsome I.P. Ltd
(86) International application number: PCT/US2019/069083
(87) International publication number: WO 2020/142500

(56) References cited:
- CN-A- 1 514 445
- JP-A- H06 337 299
- US-A- 2 213 169
- US-A1- 2003 007 589
- US-A1- 2015 131 769
- US-A1- 2015 131 769
- US-A1- 2016 369 629
- ROGERS F C: "Underground nuclear power plants: environmental and economic aspects", NUCLEAR NEWS, AMERICAN NUCLEAR SOCIETY, LA GRANGE PARK, IL, US, 1 May 1971 (1971-05-01), pages 36 - 39, XP009107664, ISSN: 0029-5574
- CHAMPLIN PATRICK: "Techno-economic evaluation of cross-cutting technologies for cost reduction in nuclear power plants", 1 June 2018 (2018-06-01), pages 1 - 104, XP055937531, Retrieved from the Internet <URL:https://dspace.mit.edu/bitstream/handle/1721.1/119044/1059517934-MIT.pdf?sequence=1&isAllowed=y> [retrieved on 20220701]
- PETER SCHMÄH: "Vertical shaft machines. State of the art and vision", ACTA MONTANISTICA SLOVACA, 1 January 2007 (2007-01-01), pages 208 - 216, XP055719774, Retrieved from the Internet <URL:https://pdfs.semanticscholar.org/da16/68a2552c770dae1ea00423838232b6c9df35.pdf?_ga=2.250460486.1118139076.1596460355-1441528850.1594731329>
- PETER SCHMAH: "Vertical shaft machines. State of the art and vision", ACTA MONTANISTICA SLOVACA, vol. 12, no. 1, January 2007 (2007-01-01), pages 208 - 216, XP055719774

## Description

### BACKGROUND

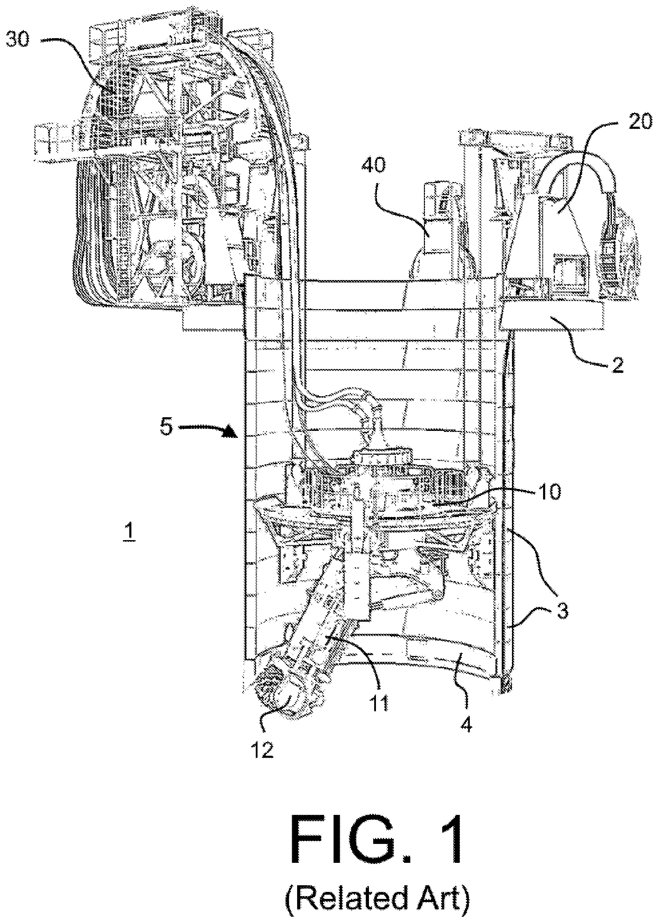

FIG. 1 is a schematic view of a related art deep shaft constructor system 1, such as a vertical shaft sinking machine (VSM). As shown in FIG. 1, support concrete ring beam 2 may be formed at a top of an area desired for a vertical shaft. A cutting or boring machine 10 is then lowered in the middle of ring beam 2. Rotatable cutter boom 11 and cutter drum 12 may then move about the edges and bottom of the ground, excavating soil, rock, clay, etc. to form space for shaft 5. Simultaneously, precast shaft segments 3 or in situ concrete may be placed at the top of a stack of shaft 5. As boring machine 10 descends and excavates, shaft 5 is thus also lengthened and descended. Integrated cutting edge 4 at a bottom of shaft 5 may aid in dividing the ground and allowing vertical displacement of shaft 5. Strand jack 40 may lift and lower shaft 5 by cutting edge 4, controlling the descent of shaft 5. Winches 20 may similarly lift machine 10 to desired excavating depths, as well as providing power and control to machine 10. Slurry station 30 may suction and process excavated material from shaft 5.

Shaft 5 may be filled with water during excavation, such that cutter boom 11 and drum 12 are underwater. This may aid in excavation collection and processing, as well as prevent groundwater leakage into shaft 5 that may occur if filled with air. As such, shaft 5 may be continuously formed and lowered while space is being created by machine 10, allowing deep vertical shafts with concrete linings to be formed relatively quickly. Shaft 5 may be 4.5-22 meters in diameter, and up to 80 meters deep. An example of related art deep shaft constructor system 1 is the Herrenknecht VSM, as described in "Herrenknect VSM" (available at herrenknecht.com/en/products/ productdetail/vertical-shaft-sinking-machine-vsm/). Further related art includes US 2015/131769A1 and "Underground nuclear power plants: environmental and economic impacts" by F. C. Rogers (May 1971), which describe underground nuclear reactors and US2213169A1, "Vertical shaft machines. State of the art and vision" by Peter Schmäh (2007), and "Techno-economic evaluation of cross-cutting technologies for cost reduction in nuclear power plants" by Patrick Champlin (2018).
which describes general underground structures. VSM machines are described in "Vertical shaft machines. State of the art and vision" by Peter Schmäh (2007), and "Techno-economic evaluation of cross-cutting technologies for cost reduction in nuclear power plants" by Patrick Champlin (2018). A further example of a vertical shaft drilling machine is provided in US20160369629A1.

### SUMMARY

An aspect of the invention is provided in claim 1 of the appendant claims. Optional features are provided in the dependent claims.

Example embodiments include methods of constructing nuclear installations, such as electrical generating plants using nuclear reactors, using one or more vertical shafts that are built vertically downward by forming the shaft at its top and descending the shaft. The shaft-creating process may use a vertical shaft sinking machine that excavates ground under the shaft and vertically lowers the shaft as the ground is removed. A blade or wedge on the shaft may facilitate this vertical descent. A basemat may be poured at a bottom of this shaft, potentially to cover the wedge and support reactor components. The basemat may be covered with materials to prevent degradation of the basemat by overheated nuclear core reactor debris that may fall onto the basemat. The entire reactor and buildings formed by the shaft(s) may thus be underground. Because vertical shafts formed by excavation and descent may be smaller, such as up to 22 meters in diameter, smaller reactors along with containment structures may be used, such as advanced reactors, small modular reactors, PRISM, or BWRX-300 designs, that can fit in in such shafts. Additional plant systems may be placed in further shafts and connected through horizontal tunnels that pass through the shafts. For example, one shaft may include safety equipment of a particular class, and another shaft may include electrical generating equipment with no safety classification, and the different shafts may be outfitted based on the different safety classes of equipment therein.

Buildings formed by the vertical shafts can use modular floors that are potentially fabricated offsite in a modular fashion with equipment pre-installed and shipped ready for installation. Each floor may be vertically lowered into the appropriate shaft and attached to walls of the shaft. Equipment can be connected between floors by running connections along shaft walls. Because floors may be modular and prefabricated, their manufacturing, shipping, and installation of the floors may not interfere with construction of vertical shafts that will house the same. Less costly methods, such as VSM, may be used to quickly fabricate the shafts followed by quick installation of all plant equipment on a series of floors in connected vertical shafts.

### BRIEF DESCRIPTIONS OF THE DRAWINGS

Example embodiments will become more apparent by describing, in detail, the attached drawings, wherein like elements are represented by like reference numerals, which are given by way of illustration only and thus do not limit the terms which they depict.
FIG. 1 is an illustration of a related art deep shaft constructor system.
FIG. 2 is a plan view of an example nuclear facility using vertical shafts.
FIG. 3 is a profile schematic of an example nuclear facility using vertical shafts.

### DETAILED DESCRIPTION

Because this is a patent document, general, broad rules of construction should be applied when reading it. Everything described and shown in this document is an example of subject matter falling within the scope of the claims, appended below. Any specific structural and functional details disclosed herein are merely for purposes of describing how to make and use examples. Several different embodiments and methods not specifically disclosed herein may fall within the claim scope; as such, the claims may be embodied in many alternate forms and should not be construed as limited to only examples set forth herein.

It will be understood that, although the ordinal terms "first," "second," etc. may be used herein to describe various elements, these elements should not be limited to any order by these terms. These terms are used only to distinguish one element from another; where there are "second" or higher ordinals, there merely must be that many number of elements, without necessarily any difference or other relationship. For example, a first element could be termed a second element, and, similarly, a second element could be termed a first element, without departing from the scope of example embodiments or methods. As used herein, the terms "and," "or," and "and/or" include all combinations of one or more of the associated listed items unless it is clearly indicated that only a single item, subgroup of items, or all items are present. The use of "etc." is defined as "et cetera" and indicates the inclusion of all other elements belonging to the same group of the preceding items, in any "and/or" combination(s).

It will be understood that when an element is referred to as being "connected," "coupled," "mated," "attached," "fixed," etc. to another element, it can be directly connected to the other element, or intervening elements may be present. In contrast, when an element is referred to as being "directly connected," "directly coupled," etc. to another element, there are no intervening elements present. Other words used to describe the relationship between elements should be interpreted in a like fashion (e.g., "between" versus "directly between," "adjacent" versus "directly adjacent," etc.). Similarly, a term such as "communicatively connected" includes all variations of information exchange and routing between two electronic devices, including intermediary devices, networks, etc., connected wirelessly or not.

As used herein, the singular forms "a," "an," and "the" are intended to include both the singular and plural forms, unless the language explicitly indicates otherwise. Indefinite articles like "a" and "an" introduce or refer to any modified term, both previously-introduced and not, while definite articles like "the" refer to a same previously-introduced term; as such, it is understood that "a" or "an" modify items that are permitted to be previously-introduced or new, while definite articles modify an item that is the same as immediately previously presented. It will be further understood that the terms "comprises," "comprising," "includes," and/or "including," when used herein, specify the presence of stated features, characteristics, steps, operations, elements, and/or components, but do not themselves preclude the presence or addition of one or more other features, characteristics, steps, operations, elements, components, and/or groups thereof.

The structures and operations discussed below may occur out of the order described and/or noted in the figures. For example, two operations and/or figures shown in succession may in fact be executed concurrently or may sometimes be executed in the reverse order, depending upon the functionality/acts involved. Similarly, individual operations within example methods described below may be executed repetitively, individually or sequentially, to provide looping or other series of operations aside from single operations described below. It should be presumed that any embodiment or method having features and functionality described below, in any workable combination, falls within the scope of the present disclosure.

As used herein, "axial" and "vertical" directions are the same up or down directions oriented along the major axis of a nuclear reactor, often in a direction oriented with gravity. "Transverse" directions are perpendicular to the "axial" and are side-to-side directions at a particular axial height.

The Inventors have newly recognized that related art reactors with large above-ground structures represent an accident vector due to aircraft strikes, weather, attacks facilitated by their accessible position, and radioactive leakage to surrounding atmosphere. The Inventors have further recognized extreme costs associated with underground tunneling and construction in a vertical direction that might avoid these above-ground risks. Although related art VSM having top-down shaft construction described in connection with FIG. 1 is more economical, for a conventional commercial nuclear plant, arranging all plant components in a single vertical shaft may eliminate separation safeguards and/or require more space than available through VSM, and several sensitive systems may have to be operated above ground, further complexifying the plant. Example embodiments described below uniquely enable solutions to these and other problems discovered by the Inventors.

The present invention provides a method of constructing nuclear facilities using vertical shaft(s). The few example methods and example nuclear facilities discussed below illustrate just a subset of the variety of different methods that can be used as and/or in connection with the present invention and nuclear facilities that may be constructed using the present invention respectively.

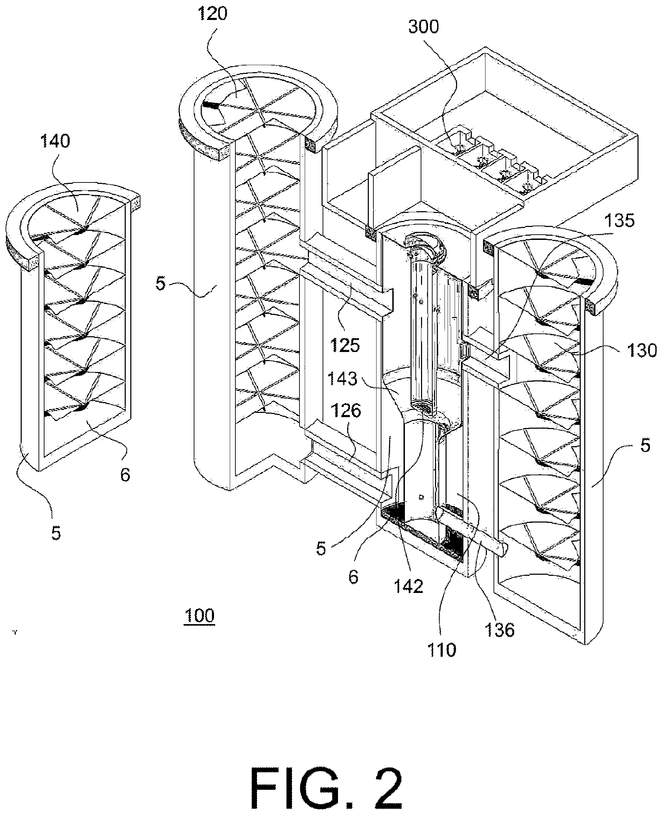

FIG. 2 is an illustration of an example nuclear facility 100, such as a commercial nuclear power plant. As seen in FIG. 2, multiple vertical shafts 5 are used to house various plant components. Shafts 5 are fabricated with related art deep shaft constructor 1 of FIG. 1; for example, shafts 5 may be excavated and, in parallel, descended with a VSM as described in connection with FIG. 1. As such, shafts 5 may be underground and of significant diameter and depth, on the order of 10-22 meters and 50-80 meters, respectively, to house large volumes of plant components. Shafts 5 may be formed of regulation-grade continuously-poured rebar concrete forming a continuous, impermeable barrier. If underground as shown in FIG. 2, example facility 100 may present an exceedingly small strike target and/or be hardened against surface impacts and explosions. Further, if underground, example facility 100 may have additional containment against radioactive release and enable easier flooding in the case of emergency cooling.

Central reactor building 110 is formed of shaft 5 and basemat 6 and houses nuclear reactor 142, containment 143, and/or closely-related safety class I equipment, such as control rods and associated drives. Shaft 5 in reactor building 110 is fabricated of materials that are compatible with a nuclear reactor environment, including materials that maintain their physical characteristics when exposed to high-temperature materials and radiation, such as stainless steels and iron alloys, aluminum alloys, zirconium alloys, high-quality concrete, etc. Shaft 5 may also be fabricated of a thickness, such as a meter or more, that ensures minimal leakage in any direction across shaft 5. For example, reactor building 110 may be formed with shaft 5 of seismic-grade and leakage-proof concrete continuously poured, potentially with rebar, in a descending annulus while excavation is performed with a VSM or the like. Shaft 5 may also be lined with stainless steel plates and/or additional radiation shielding sequentially added during construction or after.

Reactor 142 may be any type of reactor sized to fit within building 110, and as such, is likely 22 meters or less in total diameter. For example, reactor 142 may be a simplified Boiling Water Reactor as described in co-owned application applications 15/585,162 to Hunt, Dahlgren, and Marquino, filed May 2, 2017 for VERY SIMPLIFIED BOILING WATER REACTORS FOR COMMERCIAL ELECTRICITY GENERATION; 15/635,400 to Hunt, Dahlgren, and Marquino, filed June 28, 2017 for ISOLATION CONDENSER SYSTEMS FOR VERY SIMPLIFIED BOILING WATER REACTORS; and 15/677,380 to Hunt, Dahlgren, and Marquino filed August 15, 2017 for DEPRESSURIZATION AND COOLANT INJECTION SYSTEMS FOR VERY SIMPLIFIED BOILING WATER REACTORS. Such simplified reactors and associated integral valves may fit in a smaller building 110 bounded by shaft 5 of up to a 22 meter diameter formed by a deep shaft constructor system. Of course, other PRISM and LWR small module reactors may be used for reactor 142 in a smaller shaft 5; further conventional and large scale reactors, such as an ESBWR, are useable in facility 100 with a larger shaft 5, which may potentially well exceed 22 meters.

Basemat 6 in reactor building 110 may be poured concrete at a bottom of shaft 5. In connection with a VSM creating shaft 5, basemat 6 may be directly poured following excavation and descending of shaft 5. Basemat 6 may also include emergency cooling and/or ablation-resistant materials and features to mitigate decay heat buildup in the unlikely event of core relocation out of reactor 142, such as that described in co-owned patent publication 2011/0150165 published June 23, 2011 to Theofanous et al. As shown in FIG. 2, building 110 may be partially filled below reactor 142 where additional volume is unnecessary, down to basemat 6. All of basemat 6 and shaft 5 of reactor building 110 may be underground or partially buried.

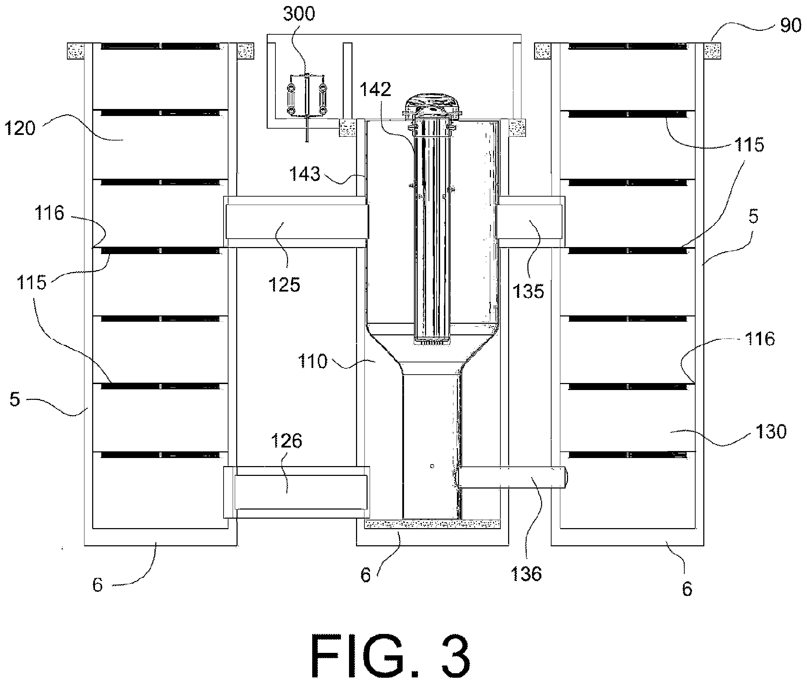

Containment 143 may enclose reactor 142 in building 110 to provide further protection about reactor 142. Although containment 143 is shown as a separate structure, walls of shaft 5 may themselves be a containment boundary (or an additional containment boundary) of the nuclear reactor when fabricated of resilient materials and impermeable standards. A concrete lid, surface building, or other surface shield level with, or below, ground 90 (FIG. 3) may enclose reactor building 110 and/or containment 143 housing reactor 142. Reactor 142 may be accessible through this lid during maintenance and construction. Emergency and/or passive isolation condenser systems 300, emergency cooling pools, and other coolant or operating systems may be positioned above building 100 as shown in FIG. 2 and/or in another auxiliary building 120 or 130 (described below) to connect to reactor 142.

A single vertical bore and shaft 5 may be limiting for operating all systems associated with a nuclear reactor, especially if limited to a 22-meter diameter or less using VSM. In such case, other reactor components may be installed and operated above ground. Alternatively, multiple shafts 5 may be used in example facility 100 to create multiple distinct buildings 110, 120, 130, and 140 that can all house and connect various reactor and power-generating equipment. Of course, as discussed above, larger shafts, however created, may accommodate all reactor components and plant equipment in a single shaft in example facility 100.

Some equipment may be positioned in auxiliary buildings 120 and 130, which may also be formed with shafts 5 excavated underground about reactor building 110. For example, one auxiliary building 120 may house reactor coolant cleanup systems and control rod drive pumps, while another auxiliary building 130 may include power generating turbines and condensers for the main coolant loop. Control building 140 may be similarly formed and house a spent fuel pool, control room, and/or other plant equipment. Alternatively, auxiliary buildings 120 and 130 and control building 140 may include any division of equipment and may be of any number and positioning about reactor building 110. Buildings 120, 130, and 140 may be equipped based on nuclear safety requirements and/or risk level, as defined in nuclear regulations or equipment characteristics. For example, auxiliary building 120 may include fire-rated equipment and, as such, may be installed with extensive fire protection systems, while auxiliary building 130 does not and lacks such systems. Similar divisions among seismic ratings, radiological controls, permeability, etc. may be used in different buildings 120, 130, 140, etc.

Transverse penetration shafts 125, 126, 135, and 136 may provide necessary connections between buildings 110, 120, 140, and 140 through holes or penetrations in shafts 5. Alternatively, as shown in FIG. 2, some buildings may be isolated, such as control building 140 with no horizontal penetrations. As an example, transverse penetration shaft 125 may connect a main steam leg from reactor 142 to a turbine and condenser in auxiliary building 120. Or, for example, transverse penetration shaft 126 may connect control rod drives or pumps below reactor 142 to power sources in auxiliary building 130. Transverse penetration shafts 125, 126, 135, and 136 may be formed through a similar process as shafts 5 and may also be underground. These shafts may alternatively be formed through other horizontal boring and/or tunneling, which tends to be far less burdensome or difficult than vertical boring, to create passages of, for example, 3 meter diameters. Transverse penetration shafts 125, 126, 135, and 136 may use regulatory-grade seals and safety systems, including steel lining and other radiation controls, to maintain isolation and containment for reactor building 110.

FIG. 3 is a profile schematic of example plant 100 showing a subset of buildings 110, 120, and 130 below ground 90. As shown in FIG. 3, auxiliary buildings 120 and 130 may include a plurality of levels or floors 115 at particular axial heights. Each floor 115 may house and support equipment appropriate for its axial level. For example, transverse penetration 125 may connect a main steam leg to a turbine housed on floor 115 at the same axial level in building 130. Adjacent floors 115 may house lower pressure turbines and/or condensers. In this way, specific plant components and interoperative systems may be vertically arranged in a single building across multiple floors 115.

Floors 115 may be modularly built and then installed in single pieces. For example, full floors with equipment preinstalled may be shipped to ground 90 as shaft 5 is constructed, and each floor 115 may be sequentially descended, such as by overhead crane, and attached to the installed shaft 5. As such, floors 115 may be constructed in whole, potentially with all necessary equipment and connections, at another site and brought to shaft 5 for installation as a single piece on site in shaft 5. Alternatively, floors 115 may be constructed in parallel with shaft 5, lowered with the same, and finished piecewise at final elevation. Floors 115 may seat into a keyway, buttress, or extrusions 116 secured directly in shaft 5, potentially at several perimeter points of each floor 115. Such extrusions 116 may seismically isolate each floor 115 from each other and/or shaft 5. Floors 115 may be solid or include passages for personnel passage or equipment connection on adjacent floors 115. Floors 115 may also be fairly identical and modular, further aiding in large-scale prefabricated construction.

Because shafts 5 of the various buildings may be constructed in parallel with excavation using a VSM, additional systems such as electrical connections, piping, data lines, etc. may be added to walls of shafts 5 during construction or following descent into the excavated hole. For example, HVAC, electric, and chilled water may be piped between floors 115 along walls of shaft 5 to systems on two adjacent floors 115. Piping between adjacent floors 115 may be installed following descent or incrementally built along shaft 5 as shaft 5 itself is vertically constructed and descended in parallel with excavation. In this way, all systems between floors 115 may be connected as the systems and floors 115 themselves are installed.

As seen, the use of VSM in constructing example facility 100 permits relatively less-expensive creation of multiple shafts 5 and related buildings. Through proper connections, these buildings may operate as a partitioned nuclear power plant with minimal above-ground exposure. The small sizing and overall vertical orientation of shafts 5 may not impede parallel construction, as floors 115 can be assembled and installed modularly in shafts 5.

Example nuclear facilities and methods thus being described, it will be appreciated by one skilled in the art that example embodiments may be varied and substituted through routine experimentation while still falling within the scope of the following claims. For example, any number of different buildings at, above, and/or below ground can be used in example embodiment facilities. Such variations are not to be regarded as departure from the scope of these claims.

## Claims

1. A method of constructing a nuclear facility (100) for a commercial light water reactor, the method comprising:
creating a reactor containment (143) by pouring concrete directly onto a top of a shaft (5) above a ground, wherein the shaft (5) has an inner diameter of 10-22 meters;
excavating the ground to create a space under a bottom of the shaft (5); and
descending the shaft (5) into the space, wherein the vertical shaft (5) is regulation/seismic-grade continuously-poured rebar concrete forming a continuous, impermeable barrier that retains its physical characteristics when exposed to operating and transient nuclear reactor conditions and is impermeable to leakage from the reactor (142) housed in the shaft (5).

2. The method of claim 1, wherein the vertical shaft (5) includes a wedge (4) at a lower vertical edge, and wherein the shaft (5) is flooded with water during excavation.

3. The method of claim 1, further comprising:
creating an auxiliary building (120, 130) by pouring concrete directly on top of a shaft (5) for the auxiliary building (120, 130) above a ground;
excavating the ground to create a space under a bottom of the shaft (5) for the auxiliary building (120, 130);
descending the shaft (5) for the auxiliary building (120, 130) into the space, wherein the vertical shaft (5) for the auxiliary building is continuous concrete that retains its physical characteristics when exposed to operating and transient nuclear reactor conditions; and
connecting the vertical shaft (5) for the reactor containment (143) and the vertical shaft (5) for the auxiliary building (120, 130) with a transverse connection (125, 126, 135, 136) extending underground between the buildings.

4. The method of claim 1, wherein the pouring pours the concrete with rebar, and wherein the vertical shaft (5) is seismic-grade rebar concrete.

## Patentansprüche

1. Verfahren zum Bau einer kerntechnischen Anlage (100) für einen kommerziellen Leichtwasserreaktor, wobei das Verfahren umfasst:
Erzeugen eines Reaktorsicherheitsbehälters (143) durch Gießen von Beton direkt aufeine Oberseite eines Schachts (5) über einem Boden, wobei der Schacht (5) einen Innendurchmesser von 10-22 Metern aufweist;
Aushub des Bodens, um einen Raum unter einer Unterseite des Schachts (5) zu schaffen; und
Absenken des Schachts (5) in den Raum, wobei der vertikale Schacht (5) ein vorschriftsgemäßer/erdbebensicherer, kontinuierlich gegossener Stahlbeton ist, der eine durchgehende, undurchlässige Barriere bildet, die ihre physikalischen Eigenschaften beibehält, wenn sie Betriebs- und transienten Kernreaktorbedingungen ausgesetzt ist, und die für Leckagen aus dem im Schacht (5) untergebrachten Reaktor (142) undurchlässig ist.

2. Das Verfahren nach Anspruch 1, wobei der vertikale Schacht (5) einen Keil (4) an einer unteren vertikalen Kante aufweist, und wobei der Schacht (5) während des Aushubs mit Wasser geflutet ist.

3. Das Verfahren nach Anspruch 1, fernerumfassend:
Erzeugen eines Hilfsgebäudes (120, 130) durch Gießen von Beton direkt auf eine Oberseite eines Schachts (5)fürdas Hilfsgebäude (120, 130)übereinem Boden;
Aushub des Bodens, um einen Raum unter einer Unterseite des Schachts (5) für das Hilfsgebäude (120, 130) zu schaffen;
Absenken des Schachts (5) für das Hilfsgebäude (120, 130) in den Raum, wobei der vertikale Schacht (5) für das Hilfsgebäude ein durchgehender Beton ist, der seine physikalischen Eigenschaften beibehält, wenn er Betriebs- und transienten Kernreaktorbedingungen ausgesetzt ist; und
Verbinden des vertikalen Schachts (5) für den Reaktorsicherheitsbehälter (143) und des vertikalen Schachts (5) für das Hilfsgebäude (120, 130) mit einer Querverbindung (125, 126, 135, 136), die sich unterirdisch zwischen den Gebäuden erstreckt.

4. Das Verfahren nach Anspruch 1, wobei beim Gießen der Beton mit Bewehrungsstahl gegossen wird, und wobei der vertikale Schacht (5)erdbebensicherer Stahlbeton ist.

## Revendications

1. - Procédé de construction d'une installation nucléaire (100) pour un réacteur industriel à eau légère, le procédé comprenant :
- créer une enceinte de confinement du réacteur (143) par versement de béton directement sur une partie supérieure d'un puits (5) au-dessus d'un sol, le puits (5) ayant un diamètre interne de 10 à 22 mètres ;
- creuser le sol pour créer un espace sous un fond du puits (5) ; et
- faire descendre le puits (5) dans l'espace, le puits vertical (5) étant du béton armé versé en continu de qualité réglementaire/sismique formant une barrière continue, imperméable, qui conserve ses caractéristiques physiques lorsqu'elle est exposée à des conditions de réacteur nucléaire de fonctionnement et transitoires et qui est imperméable à une fuite en provenance du réacteur (142) reçu dans le puits (5).

2. - Procédé selon la revendication 1, dans lequel le puits vertical (5) comprend une cale (4) à un bord vertical inférieur, et dans lequel le puits (5) est inondé avec de l'eau pendant le creusement.

3. - Procédé selon la revendication 1, comprenant en outre :
- créer une construction auxiliaire (120, 130) par versement de béton directement sur la partie supérieure d'un puits (5) pour la construction auxiliaire (120, 130) au-dessus d'un sol ;
- creuser le sol pour créer un espace sous un fond du puits (5) pour la construction auxiliaire (120, 130) ;
- faire descendre le puits (5) pour la construction auxiliaire (120, 130) dans l'espace, le puits vertical (5) pour la construction auxiliaire étant du béton continu qui conserve ses caractéristiques physiques lorsqu'il est exposé à des conditions de réacteur nucléaire de fonctionnement et transitoires ; et
- relier le puits vertical (5) pour l'enceinte de confinement de réacteur (143) et le puits vertical (5) pour la construction auxiliaire (120, 130) par une liaison transversale (125, 126, 135, 136) s'étendant en sous-sol entre les constructions.

4. - Procédé selon la revendication 1, dans lequel le versement verse du béton armé, et dans lequel le puits vertical (5) est du béton armé de qualité sismique.
